# FASCICULE DE BREVET EUROPEEN

(11) **EP 4 364 387 B1**
(45) Date de publication et mention de la délivrance du brevet: **18.06.2025**
(21) Numéro de dépôt: 22747079.6
(22) Date de dépôt: 29.06.2022
(51) Int. Cl.: H04L 65/612, H04L 67/561, H04L 65/60, H04L 65/80, H04L 65/75

(54) **PROCEDE DE CONTROLE DE LA LIVRAISON PARTAGEE D'UN CONTENU**
VERFAHREN ZUR ÜBERPRÜFUNG DER BEREITSTELLUNG VON GEMEINSAM GENUTZTEM INHALT
METHOD FOR CHECKING SHARED CONTENT DELIVERY

(30) Priorité: 30.06.2021 FR 2107057
(43) Date de publication de la demande: 08.05.2024
(73) Titulaire: Orange, 92130 Issy-les-Moulineaux (FR)
(72) Inventeur: FIEAU, Frédéric, 92326 CHÂTILLON CEDEX (FR); FROMENTOUX, Gaël, 92326 CHÂTILLON CEDEX (FR); CORBEL, Romuald, 92326 CHÂTILLON CEDEX (FR); STEPHAN, Emile, 92326 CHÂTILLON CEDEX (FR)
(74) Mandataire: Vidon Brevets & Stratégie
(86) Numéro de dépôt international: PCT/FR2022/051295
(87) Numéro de publication internationale: WO 2023/275491

(56) Documents cités:
- EP-A1- 3 065 411
- WO-A2-2010/136699
- US-B1- 10 771 524

## Description

### Domaine de l'invention

Le domaine de l'invention est celui de la livraison de contenus vers un terminal utilisateur. Plus précisément, l'invention concerne une solution dans laquelle, un contenu à livrer étant découpé en une pluralité de portions, ces différentes portions sont transmises par différents nœuds de réseaux de diffusion de contenus afin de garantir ou d'augmenter, notamment, un débit de livraison du contenu. On note que, dans le contexte de l'invention, des nœuds différents peuvent transmettre une même portion du contenu ou des portions distinctes.

### Art antérieur et ses inconvénients

Avec la montée en débit des réseaux de communications, grâce notamment à l'avènement des réseaux conformes à la 4^{ème} génération de normes de communication radio et à la mise en œuvre des réseaux conformes à la 5^{ème} génération de normes de communication radio de plus en plus d'utilisateurs de terminaux, tels que des téléphones cellulaires ou tout autres terminaux mobiles ou non, peuvent lire en continu ou télécharger des contenus tels qu'un événement sportif ou d'actualité en direct, un film ou un contenu audio tel qu'un podcast. Ces contenus sont livrés par des nœuds d'un réseau de diffusion de contenu ou CDN (*Content Delivery Network* en anglais).

Dans des architectures connues de distribution de contenus, des serveurs de contenus, gérés par un ou plusieurs fournisseurs de contenus, transmettent des contenus à des nœuds serveurs, ou nœuds CONs appartenant à un ou plusieurs réseaux de diffusion de contenus CDN, conformément à des contrats de fourniture et de livraison de contenus préétablis dans lesquels figurent notamment des informations relatives au débit de transmission des données, des paramètres de qualité de transmission ainsi que des informations relatives au volume de données à transmettre par les nœuds du réseau de diffusion de contenu vers les terminaux utilisateurs ayant requis un contenu.

Lorsque plusieurs acteurs sont impliqués dans la livraison d'un même contenu à destination d'un même terminal utilisateur, il est important de s'assurer que tous les acteurs de la livraison remplissent leur part du contrat.

En effet, dans une telle situation, il est important que quiconque puisse s'assurer que le service fourni est conforme à ce qui a été négocié entre les parties.

Cependant les solutions actuelles de livraison de contenu partagées ne permettent pas de garantir que la livraison du contenu demandé intervienne conformément à ce qui a été négocié entre les parties.

Le document WO 2010/136699 A2 divulgue un procédé de distribution de contenu à un utilisateur, mis en œuvre par un premier dispositif de distribution de contenu (dispositif secondaire). L'utilisateur obtient au moins un indicateur de qualité relatif à une distribution d'une partie du contenu par un dispositif de distribution de contenu (dispositif primaire).

Il existe donc un besoin d'une technique ne présentant pas tout ou partie des inconvénients précités.

### Exposé de l'invention

A cette fin, l'invention concerne un procédé de contrôle d'une livraison d'un contenu vers un terminal utilisateur effectuée par une pluralité de nœuds appartenant à au moins un réseau de livraison de contenus, lesdits nœuds pouvant livrer une ou plusieurs portions du contenu.

Un tel procédé est mis en œuvre par un nœud dit nœud instigateur sélectionné parmi la pluralité de nœuds et comprenant les étapes suivantes :- comparaison, pour une pluralité de portions du contenu livrées, de valeurs d'au moins une donnée de télémétrie effective avec des valeurs correspondantes d'au moins une donnée de télémétrie attendue,
- réception d'au moins un résultat des mêmes comparaisons effectuées par au moins un deuxième nœud, dit nœud suiveur, sélectionné parmi la pluralité de nœuds,
- acquittement de la livraison de portions du contenu lorsqu'au moins une majorité des résultats de comparaison obtenus indiquent une conformité des valeurs d'au moins une donnée de télémétrie effective avec les valeurs d'au moins une donnée de télémétrie attendue.

Les données de télémétrie étant directement liées à la qualité de la transmission du contenu, elles constituent des données de choix pour déterminer si les conditions de livraison du contenu sont satisfaites et ainsi acquitter la livraison du contenu lorsqu'elles sont validées par la majorité ou l'ensemble des nœuds impliqués dans la livraison du contenu, autrement dit lorsqu'un consensus est atteint concernant la bonne livraison du contenu. Un nœud impliqué dans la livraison du contenu ne livre pas nécessairement une portion du contenu, un nœud participant à la livraison peut mesurer les valeurs de données de télémétrie ou simplement participer à la validation des résultats des comparaisons.

La présente solution permet à tous les acteurs impliqués dans la livraison du contenu d'avoir accès aux données de télémétrie et ainsi d'avoir un droit de regard sur le déroulé de la livraison du contenu. Ceci présente un avantage particulier lorsque ces acteurs ne sont pas gérés par la même entité administrative (par exemple par le même opérateur de réseau de livraison de contenus).

Selon une implémentation particulière du procédé de contrôle de la livraison, les résultats de comparaison sont pondérés pour déterminer si une majorité des résultats de comparaison obtenus indiquent une dite conformité.

Plus particulièrement, une valeur d'un coefficient de pondération à appliquer aux résultats de comparaison dépend d'au moins une fonction mise en œuvre par des nœuds appartenant à la pluralité de nœuds.

Dans une telle implémentation, les résultats de comparaison peuvent être pondérés notamment en fonction des nœuds qui les ont calculés. Par exemple, les résultats calculés par le nœud instigateur ont un coefficient de pondération plus élevé. Dans un autre exemple, les résultats calculés par un nœud livrant une portion du contenu ont un coefficient de pondération moins élevé qu'un nœud mesurant les données de télémétrie.

Selon une implémentation particulière du procédé de contrôle de la livraison, les résultats de comparaison et/ou ladite au moins une donnée de télémétrie effective sont accompagnés d'au moins une information permettant de vérifier leur intégrité.

En effet, tous les nœuds participant à la livraison du contenu ayant accès aux valeurs des données de télémétrie, il est important de s'assurer de l'intégrité des données et/ou des résultats des comparaisons afin de n'acquitter la livraison du contenu que lorsque la majorité des nœuds à la certitude que toutes les conditions ont été rencontrées.

Ainsi, lorsque l'intégrité d'au moins l'un des résultats de comparaison ou d'une donnée de télémétrie n'est pas vérifiée, la livraison de portions du contenu n'est pas acquittée.

Selon une implémentation particulière du procédé de contrôle de la livraison, une information permettant de vérifier l'intégrité des résultats de comparaison et/ou de ladite au moins une donnée de télémétrie effective comprend une liste comprenant des identifiants de nœuds appartenant à la pluralité de nœuds et/ou comprend un condensé (aussi communément appelé « hash » en anglais) des données constitutives d'au moins des résultats de comparaison et/ou de ladite au moins une donnée de télémétrie effective, et/ou est relative à au moins une fonction mise en œuvre par des nœuds appartenant à la pluralité de nœuds.

Ainsi, si des données (données de télémétrie ou résultats de comparaison) sont fournies par un nœud non référencé, l'ensemble des nœuds sait que l'intégrité de ces dernières est compromise.

Par exemple, les résultats calculés par le nœud instigateur sont considérés intègres, de mêmes que ceux calculés par un nœud mesurant les données de télémétrie.

Selon une implémentation particulière du procédé de contrôle de la livraison, celui-ci comprend une étape de réception d'une demande de livraison de portions du contenu émise par le terminal utilisateur, ladite demande de livraison comprenant au moins une valeur d'au moins une donnée de télémétrie attendue relative à la livraison de portions du contenu.

Dans cette implémentation, le terminal utilisateur indique pour chaque contenu demandé, les conditions de livraison de ce dernier. Le terminal utilisateur peut ainsi moduler les conditions de livraison d'un contenu en fonction de son environnement. Ainsi, les conditions de livraison d'un contenu demandé sont différentes selon que le terminal utilisateur utilise une connexion Wi-Fi établie avec une passerelle domestique ou une connexion cellulaire conforme à la 5^{ème} génération de normes de communication radio par exemple.

Selon une autre implémentation particulière du procédé de contrôle de la livraison, celui-ci comprend, en réponse à la réception d'une demande de livraison du contenu émise par le terminal utilisateur, une étape d'émission à destination du terminal utilisateur d'un message comprenant un identifiant dudit au moins un deuxième nœud et des valeurs d'au moins une donnée de télémétrie attendue.

Dans cette implémentation particulière, le premier nœud indique les conditions de livraison du contenu demandé au terminal utilisateur. Connaissant la nature et les capacités de la liaison établie avec le terminal utilisateur ainsi que des informations relatives aux prestations de services souscrites par l'utilisateur, le premier nœud peut déterminer les conditions de livraison relatives au contenu demandé et ainsi identifier les autres nœuds qui vont participer à cette livraison afin de garantir la conformité de la livraison avec les prestations de services souscrites par l'utilisateur.

Selon une caractéristique du procédé de contrôle de la livraison d'un contenu, celui-ci comprend, préalablement à la livraison de portions du contenu, une étape de création d'un registre partagé relatif audit contenu, destiné à mémoriser des données relatives à la livraison du contenu et à valider des données de télémétrie relatives à la livraison de portions du contenu.

La mise en place d'un registre partagé entre les différents nœuds permet de proposer la livraison d'un contenu au moyens de plusieurs nœuds n'appartenant pas à un même réseau de distribution de contenus tout en garantissant le respect des conditions de livraisons établies entre le terminal utilisateur et le premier nœud.

La validation de l'ensemble des données de télémétrie étant soumise à tout ou partie des nœuds impliqués dans la livraison du contenu garantit l'impartialité de la validation des résultats. Ainsi, une confiance forte est établie entre les différents opérateurs gestionnaires des nœuds impliqués dans la livraison du contenu.

Enfin, un tel registre partagé est propre à un unique contenu. Cela offre un cloisonnement fin des informations qui permet une gestion facilitée de la livraison de contenus par chacun des gestionnaires des réseaux de livraison concernés.

Selon une caractéristique du procédé de contrôle de la livraison d'un contenu, l'étape de création du registre partagé comprend les étapes suivantes :
- diffusion d'un message comprenant une adresse d'un registre local du premier nœud relatif à la livraison du contenu,
- réception d'une demande d'établissement d'une connexion entre le registre local du premier nœud et un registre local du deuxième nœud au travers de laquelle les données relatives à la livraison du contenu sont échangées.

Dans cette implémentation, le premier nœud diffuse un message indiquant sa capacité à livrer un contenu donné et comprenant des informations relatives à un registre local relatif à ce contenu. Un tel registre local sert de registre de référence pour les registres qui sont créés dans les autres nœuds impliqués dans la livraison du contenu. Toute modification intervenant dans le registre local du premier nœud est répliquée dans les registres locaux des autres nœuds après validation par l'ensemble des nœuds.

Selon une caractéristique du procédé de contrôle de la livraison d'un contenu, celui-ci comprend une étape de négociation avec ledit deuxième nœud au cours de laquelle des valeurs d'au moins une donnée de télémétrie attendue sont déterminées.

Au cours de cette étape de négociation, le premier nœud transmet les conditions de transmission en termes de débit, de durée de transmission, etc., propres au terminal utilisateur afin que le deuxième nœud puisse définir des valeurs de données de télémétrie attendues pour la livraison de la portion de contenu dont il a la charge.

Selon une caractéristique du procédé de contrôle de la livraison d'un contenu, dans lequel, au cours de l'étape de négociation, le nœud instigateur et les nœuds suiveurs échangent en outre des données relatives à un type de récompense pour la mise en œuvre d'une récompense relative à la livraison desdites portions du contenu.

Une telle récompense est par exemple la rémunération de la livraison du contenu. Le premier nœud peut dans cet exemple transmettre des grilles tarifaires associés à des conditions de transmission en termes de débit, de durée de transmission, ainsi qu'à certaines prestations de services (tels que le routage de la demande, le stockage en cache, le transcodage...) que d'autres nœuds pourraient fournir, etc. ainsi que les modalités de répartition.

L'acquittement de la livraison de portions du contenu déclenche une transaction de paiement.

En conditionnant une récompense destinée à être attribuée au profit du réseau de diffusion de contenu, ou de son gestionnaire, au respect de conditions de transmission matérialisées par des données de télémétrie attendues, on offre plus de certitudes à l'utilisateur demandant le contenu quant à la qualité du contenu qui sera diffusé par un groupe de nœuds puisque la qualité de la transmission est garantie.

La solution proposée est dynamique et offre une souplesse d'utilisation intéressante puisqu'elle s'applique au cas par cas. En effet, la récompense conditionnelle concerne la transaction d'une ou de plusieurs portions d'un contenu donné et les nœuds impliqués dans la livraison de ce contenu. En d'autres termes, la transmission d'un nouveau contenu par un même groupe de nœuds ou la transmission du même contenu par un autre groupe de nœuds déclenche la création d'une nouvelle récompense conditionnelle associée à de nouvelles valeurs de données de télémétrie attendues. En effet, les différents nœuds impliqués dans la livraison du contenu demandé peuvent appartenir à des réseaux de diffusions de contenus distincts.

Les données de télémétrie étant directement liées à la qualité de la transmission du contenu, elles constituent des données de choix pour déterminer si les conditions de déclenchement de la récompense sont satisfaites.

Dans une telle solution, la récompense peut être graduée. En effet, si seule une partie des conditions de transmission négociées est remplie, la récompense peut être allouée mais celle-ci correspond à une contrepartie moindre puisque le service attendu n'a pas été rendu en totalité, ou encore seuls certains nœuds peuvent percevoir la récompense selon qu'ils ont ou non remplies les conditions de livraison. Ainsi, à titre d'exemple, si la récompense est un montant à payer pour le service rendu, la grille tarifaire peut indiquer un montant revu à la baisse puisque toutes les conditions de transmission n'ont pu être respectées.

Enfin, dans une telle solution, deux nœuds distincts peuvent livrer une même portion du contenu, il est alors possible de récompenser par exemple le nœud qui livre le plus rapidement le contenu.

Selon une caractéristique du procédé de contrôle de la livraison d'un contenu une donnée de télémétrie appartient à un groupe comprenant entre autres :
- un délai de transit entre le nœud instigateur, les nœuds suiveurs et le terminal utilisateur d'un paquet de données constitutif du contenu,
- un identifiant d'au moins un module d'interconnexion acheminant au moins un paquet de données constitutif du contenu entre le nœud instigateur, les nœuds suiveurs et le terminal utilisateur, l'identifiant pouvant avantageusement comprendre l'identifiant d'un opérateur assurant la gestion du module d'interconnexion,
- un horaire de transit d'un paquet de données constitutif du contenu au travers d'un module d'interconnexion, correspondant au moment où le module d'interconnexion reçoit, traite ou transmet le paquet de données,
- un délai de franchissement du module d'interconnexion par un paquet de données constitutif du contenu,
- un délai de traitement d'un paquet de données constitutif du contenu par le module d'interconnexion,
- une qualité de service, représentative de la priorisation du paquet de données constitutif du contenu, cette qualité de service pouvant selon un exemple être représentée par une indication qualitative de traitement du paquet lors de son acheminement vers le terminal utilisateur,
- la réception sans retard et/ou sans perte ni retransmission d'un groupe de paquets de données constitutif d'au moins une partie du contenu,
- une combinaison des données de télémétrie individuelles du groupe citées ci-dessus.

L'invention concerne également un nœud d'un réseau de livraison de contenus, dit nœud instigateur, capable de contrôler une livraison d'un contenu vers un terminal utilisateur effectuée par une pluralité d'autres nœuds, lesdits nœuds pouvant livrer une ou plusieurs portions du contenu

Un tel nœud comprend des moyens pour :
- comparer, pour une pluralité de portions du contenu livrées, des valeurs d'au moins une donnée de télémétrie effective avec des valeurs correspondantes d'au moins une donnée de télémétrie attendue,
- recevoir au moins un résultat des mêmes comparaisons effectuées par au moins un deuxième nœud, dit nœud suiveur, sélectionné parmi la pluralité de nœuds,
- acquitter la livraison de portions du contenu lorsqu'au moins une majorité des résultats de comparaison obtenus indiquent une conformité des valeurs d'au moins une donnée de télémétrie effective avec les valeurs d'au moins une donnée de télémétrie attendue..

L'invention a également pour objet un système comprenant au moins un terminal utilisateur et une pluralité de nœuds appartenant à au moins un réseau de livraison de contenus, lesdits nœuds pouvant livrer une ou plusieurs portions d'un contenu vers ledit terminal utilisateur, ledit système étant caractérisé en ce qu'un premier nœud dit nœud instigateur sélectionné parmi la pluralité de nœuds, comprenant des moyens pour :
- comparer, pour une pluralité de portions du contenu livrées, des valeurs d'au moins une donnée de télémétrie effective avec des valeurs correspondantes d'au moins une donnée de télémétrie attendue,
- recevoir au moins un résultat des mêmes comparaisons effectuées par au moins un deuxième nœud, dit nœud suiveur, sélectionné parmi la pluralité de nœuds,
- acquitter la livraison de portions du contenu lorsqu'au moins une majorité des résultats de comparaison obtenus indiquent une conformité des valeurs d'au moins une donnée de télémétrie effective avec les valeurs d'au moins une donnée de télémétrie attendue.

L'invention concerne enfin un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé objet de l'invention précité.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****fig. 1****]** : cette figure représente un schéma d'un système dans lequel la présente invention peut être mise en œuvre,
**[****fig. 2****] :** cette figure représente un diagramme des différentes étapes du procédé de contrôle de la livraison d'un contenu objet de l'invention,
**[****fig. 3****]** : cette figure représente un nœud apte à mettre en œuvre le procédé de contrôle de la livraison d'un contenu objet de l'invention.

### Description détaillée de modes de réalisation de l'invention

Le principe général de l'invention repose sur le partage de la livraison d'un contenu à destination d'un terminal utilisateur, tel qu'un terminal mobile ou une télévision connectée, entre une pluralité de nœuds appartenant ou pas à un même réseau de diffusion de contenu et sur la validation, par consensus entre différents nœuds impliqués dans cette livraison, des conditions dans lesquelles cette livraison a été effectuée. Afin de gérer au mieux cette livraison partagée du contenu, dans un mode particulier de réalisation, un registre partagé est mis en place entre les différents nœuds impliqués dans la livraison du contenu demandé au terminal utilisateur. Ce registre partagé permet de partager les conditions de livraison du contenu en partageant des valeurs de données de télémétrie attendues pour les liaisons établies entre les différents nœuds concernés et le terminal utilisateur en fonction des capacités de transmission de ces liaisons et de la prestation de service requise par l'utilisateur du terminal utilisateur. Le registre partagé permet également la validation, ou l'acquittement, par consensus de la livraison du contenu laquelle peut alors déclencher l'exécution de transactions au profit des différents nœuds en fonction du respect des valeurs des données de télémétrie négociées préalablement. Cela permet aux différents intervenants impliqués dans la livraison du contenu de vérifier, à tout moment, l'authenticité et l'intégrité des actions menées dans le cadre de la livraison du contenu et par voie de faits, de s'assurer que la livraison s'est déroulée conformément aux conditions établies entre le terminal utilisateur et les différents nœuds capables de fournir le contenu demandé.

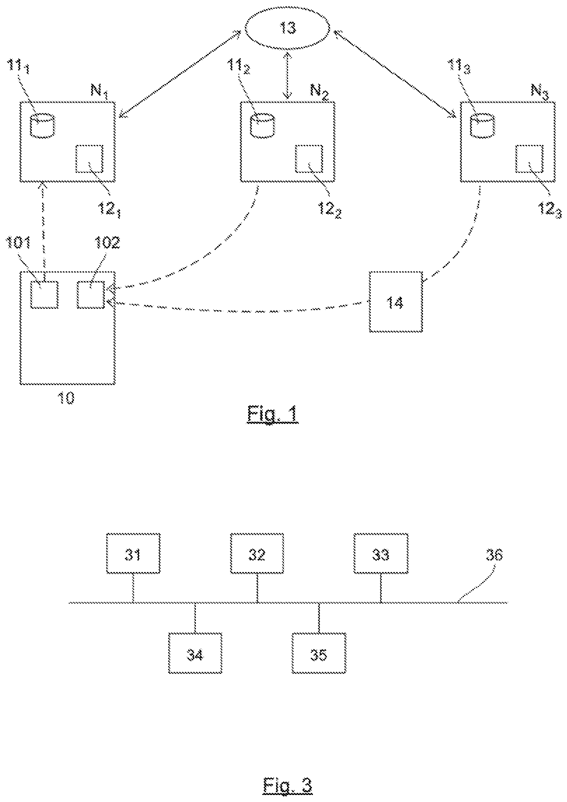

On présente désormais, en relation avec la [fig. 1] un schéma d'un système dans lequel la présente invention peut être mise en œuvre.

Un tel système comprend un terminal utilisateur 10, tel qu'un smartphone, un téléviseur connecté, un ordinateur personnel, un décodeur de télévision numérique ou *« set-top-box »,* etc. Un tel terminal utilisateur 10 comprend, entre autres, dans l'exemple envisagé ici, une première interface de communication 101 de type filaire ou radio courte distance de type Wi-Fi ou Bluetooth, et au moins une deuxième interface de communication 102 de type radio conforme à 4^{ème} (4G) ou à la 5^{ème} génération (5G) de normes de communication radio.

Le système comprend également une pluralité de nœuds N₁-N₃. Le système décrit peut, bien entendu, comprendre plus de trois nœuds. En tout état de cause, le système comprend au moins deux nœuds afin d'être capable de proposer une livraison partagée d'un contenu.

Le premier nœud N₁, dit nœud instigateur, appartient à un premier réseau de livraison de contenus (non représenté sur les figures). Un tel nœud instigateur N₁ offre de livrer un contenu donné. Le nœud instigateur N₁ comprend, entre autres, un serveur cache 11₁ stockant au moins une portion du contenu donné et un registre 12₁, dit registre instigateur.

Le deuxième nœud N₂, dit nœud suiveur, peut appartenir au premier réseau de livraison de contenus ou à un deuxième réseau de livraison de contenus (non représenté sur les figures). Un tel nœud suiveur N₂ peut également livrer une portion du contenu offert en livraison par le nœud instigateur N₁. Le nœud suiveur N₂ comprend, entre autres, un serveur cache 11₂ stockant au moins une portion du contenu donné et un registre 12₂, dit registre suiveur. La portion du contenu livrée par le nœud suiveur N₂ peut être la même que celle livrée par le nœud instigateur N₁ ou une portion différente.

Le troisième nœud N₃, dit également nœud suiveur, peut appartenir au premier réseau de livraison de contenus, au deuxième réseau de livraison de contenus ou à un troisième réseau de livraison de contenus (non représenté sur les figures). Tout comme le nœud suiveur N₂, le nœud suiveur N₃ peut livrer une portion du contenu offert en livraison par le nœud instigateur N₁. Le nœud suiveur N₃ comprend, entre autres, un serveur cache 11₃ stockant au moins une portion du contenu donné et un registre 12₃, dit registre suiveur. La portion du contenu livrée par le nœud suiveur N₃ peut être la même que celle livrée par le nœud instigateur N₁ et/ou le nœud suiveur N₂ ou une portion différente.

Les nœuds suiveurs N₂, N₃ peuvent participer à la livraison du contenu soit en livrant effectivement une ou plusieurs portions du contenu, soit en mesurant des valeurs de données de télémétrie relatives à la livraison du contenu, soit en participant à la validation de la livraison sur la base de valeurs de données de télémétrie relatives à la livraison du contenu mesurées.

Le registre instigateur 11₁ et les deux registres suiveurs 11₂ et11₃ constituent un registre partagé propre au contenu offert en livraison par le nœud instigateur N₁.

Dans une première implémentation particulière de l'invention, représentée à la figure 1, il y a autant de registres partagés que de contenus à livrer. Cela offre un cloisonnement fin des informations qui permet une gestion facilitée de la livraison de contenus par chacun des gestionnaires des réseaux de livraison concernés.

Dans une deuxième implémentation particulière, non représentée sur les figures, le système comprend, embarqué dans un équipement réseau de l'un des réseaux de livraison de contenus, un module de synchronisation 13 permettant aux différents registres 11₁, 11₂ et 11₃ de communiquer entre eux (et de se synchroniser) afin de mettre en œuvre l'invention. Un tel module 13 peut être un module logiciel, un module matériel ou une combinaison des deux.

Quelle que soit l'implémentation retenue, le système peut comprendre en outre un module d'interconnexion 14. Un tel module d'interconnexion 14 peut être un module de type UPF (*User Plane Function*) entre une infrastructure mobile d'un réseau 5G et le réseau de données ou encore un multiplexeur d'accès à ligne d'abonné numérique ou DSLAM (*Digital Subscriber Line Access Multiplexer*). D'autres types de modules d'interconnexion 14 peuvent bien sûr être envisagés.

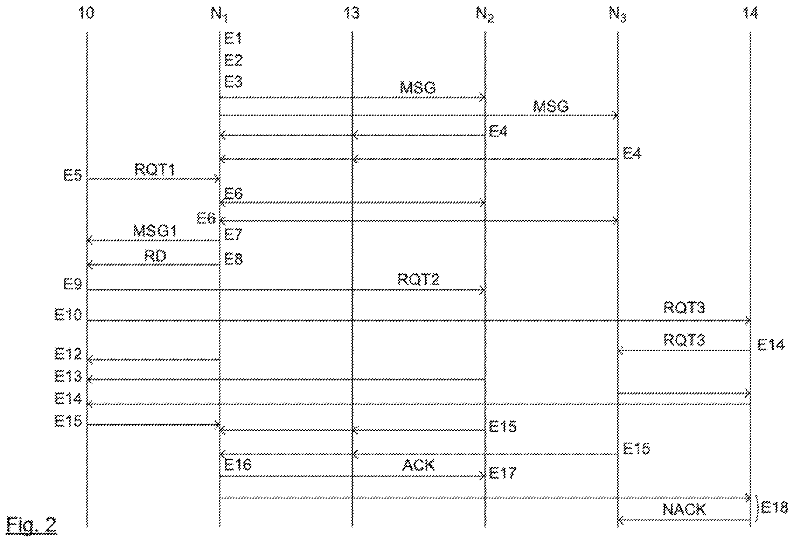

La **[****fig. 2****]** représente un diagramme des différentes étapes du procédé de contrôle de la livraison d'un contenu objet de l'invention.

Un nœud instigateur N₁ stockant un contenu Cont1 dans un serveur cache 11₁ crée, dans une étape E1, un registre local 12₁ dédié à la livraison du contenu Cont1. Un tel registre local 12₁ est par exemple une base de données mono-fichier telle qu'une base de données de type *« SQLite* », connue en soi. Le registre local 12₁ comprend des données techniques relatives à la livraison du contenu Cont1 telles que définies dans les documents RFC (*Request For Comment*) 8008 et 8006 publiés par l'IETF (*Internet Engineering Task Force*). Le registre local 12₁ est également destiné à mémoriser des valeurs de données de télémétrie relatives à la livraison du contenu Cont1 ainsi que, dans le mode de réalisation décrit ici, des données relatives à des récompenses associées au respect des valeurs de télémétrie relatives à la livraison du contenu.

Dans une étape E2, le nœud instigateur N₁ initie la création d'un registre partagé SR relatif au contenu Cont1 avec au moins un nœud suiveur N₂, N₃.

Dans un premier mode de réalisation, dans une étape E3, le nœud instigateur N₁ diffuse un message MSG indiquant sa capacité à livrer de manière partagée le contenu Cont1. Le message MSG comprend une URL pointant vers le registre local 12₁ du nœud instigateur N₁ ainsi que des conditions de livraison partagée telles qu'un débit minimum, ou encore un niveau de qualité, par exemple HD ou. 4K, de la portion de contenu à livrer, une durée de livraison, etc.

Le registre local 12₁ du nœud instigateur N₁ comprend un fichier « yaml » (*Yet Another Markup Language*) spécifiant la manière dont les différents registres locaux 12₂, 12₃ vont s'interconnecter lors de la mise en œuvre de la présente solution.

Un exemple du contenu d'un tel fichier « yaml » est le suivant :

```
 apiVersion: apps/vx
 kind: DeploymentEsclave
 metadata:
  name: NameDeployement
  labels:
   app: LabelDeployement
  spec:
   replicas: NombreDeReplicat
   selector:
    matchLabels:
     app: LabelDeployement
   template:
    metadata:
     labels:
      app: LabelDeployement
    spec:
     esclave: IDESCLAVE/IPESCLAVE
     containers:
     -name: NOMAPPLICATION
      image: NONCONTENEUR
      ports:
     -containerPort: port
      resources:
      limits:
       RESSOURCELIMITE
      requests:
       RESSOURCEDEMANDE
```

Le registre local 12₁ du nœud instigateur N₁ comprend également plusieurs fichiers constituant des sections de la proposition de livraison partagée instiguée par le nœud instigateur N₁ dans lesquelles toutes les données nécessaires à la livraison du contenu sont répertoriées.

Ainsi, le registre local 12₁ comprend entre autres :
- une section définissant des paramètres permettant d'interconnecter les différents registres locaux 121, 122, 123 tels que des identifiants des interfaces à utiliser ; le contenu de cette section est défini dans les documents RFC 7336 ,RFC 6707, et RFC 7337 publiés par l'IETF (*Internet Engineering Task Force*) ;
- une section concernant le démarrage de l'interconnexion une fois cette dernière mise en place ;
- une section, dite manifest (.mdp), définissant les différents portions constitutives du contenu Cont1 ;
- une section dite "CDNI Logging interface" comprenant les valeurs de données de télémétrie attendues, une telle section est définie dans le document RFC 7937 publié par l'IETF.

Ces différents fichiers peuvent se présenter au format JavaScript *Object Notation* (JSON).

Dans un mode de réalisation particulier, l'ensemble de ces fichiers peut être regroupé dans un fichier compressé tel qu'un fichier.zip.

Dans une étape E4, les nœuds suiveurs N₂, N₃ capables de participer à la livraison du contenu Cont1 conformément aux conditions de livraison spécifiées dans le message MSG établissent une connexion avec le nœud instigateur N₁ au travers d'un module de synchronisation 13. Cette connexion établie au travers du module de synchronisation 13 permet la mise à jour des registres locaux 12₂, 12₃ créés respectivement par les nœuds suiveurs N₂, N₃ en réponse au message MSG. Les nœuds suiveurs N₂, N₃ transmettent via cette connexion des valeurs de données de télémétrie qu'ils sont capables de garantir.

Afin de sécuriser les échanges entre les différents registres locaux 12₁, 12₂, 12₃, les nœuds suiveurs N₂, N₃ peuvent transmettre un certificat temporaire de type ACME (*Certificates in Automated Certificate Management Environment*) STAR (*Support for Short-Term, Automatically-Renewed*) dont les principes sont décrits dans le document RFC 8739 publié par l'IETF ou encore un jeton OAuth. Ces éléments permettent au nœud instigateur N₁ de gérer les échanges au sein du registre partagé SR.

Dans un deuxième mode de réalisation, la technologie Kubernetes est utilisée pour permettre la synchronisation des registres locaux 12₁,12₂ et 12₃ entre eux.

Typiquement, une grappe de nœuds Kubernetes comprend un premier nœud dit nœud de gestion, ou « *Kubernetes master* » qui correspond ici au nœud instigateur N₁, et N nœuds de calcul, ou « *Kubernetes nodes* » qui correspondent ici aux nœuds suiveurs N₂, N₃. Ces nœuds, bien que faisant partie d'une même grappe de nœuds Kubernetes, peuvent appartenir à des réseaux de livraison de contenus différents.

Dans ce deuxième mode de réalisation, le nœud instigateur N₁ comprend, comme tout nœud Kubernetes, un contrôleur, un module API (*Application Programming Interface* ou interface de programmation d'applications) et une base de données dite ETCD, correspondant au registre local 12₁, qui consiste en un registre dynamique de configuration des nœuds suiveurs N₂, N₃.

Les nœuds suiveurs N₂, N₃ comprennent également une base de données ETCD, correspondant respectivement aux registres locaux 12₂, 12₃.

Dans un souci de réduction des coûts et d'amélioration de la flexibilité des infrastructures réseaux, les architectures d'informatique en nuage sont le plus souvent des architectures multi-sites dans lesquelles les nœuds constitutifs des grappes de nœuds peuvent être non co-localisés. Par exemple le nœud instigateur N₁ et le nœud suiveur N₂ d'une grappe de nœuds sont situés sur un site A alors que le nœud suiveur N₃ est quant à lui situé sur un site B distant.

Dans un tel cas de figure, il est nécessaire de synchroniser les états de fonctionnements des différentes tâches exécutées par les nœuds d'une même grappe de nœuds pour s'assurer de la bonne fourniture du service requis, ici la livraison partagée du contenu Cont1.

Ainsi, le registre local 12₁ du nœud instigateur N₁ transmet un message de demande de création d'un registre local 12₂, 12₃ dédié au contenu Cont1 à livrer à destination des nœuds suiveurs N₂, N₃. Un tel message est relayé par le module de synchronisation 13. Une fois les registres locaux 12₂, 12₃ créés, le nœud instigateur N₁ transmet un fichier de configuration à destination des nœuds suiveurs N₂, N₃. Une fois leurs registres locaux 12₂, 12₃ validé et appliqué (stocké) la configuration, les nœuds suiveurs N₂, N₃ en informent le nœud instigateur N₁ en transmettant une confirmation de prise en compte de la configuration.

Un tel fichier de configuration plusieurs sections de la proposition de livraison partagée instiguée par le nœud instigateur N₁ dans lesquelles toutes les données nécessaires à la livraison du contenu sont répertoriées.

Ainsi, le fichier de configuration comprend entre autres :
- une section définissant des paramètres permettant d'interconnecter les différents registres locaux 121, 122, 123 tels que des identifiants des interfaces à utiliser ; le contenu de cette section est défini dans les documents RFC 7336, RFC 6707, et RFC 7337 publiés par l'IETF ( ;
- une section concernant le démarrage de l'interconnexion une fois cette dernière mise en place ;
- une section, dite manifest (.mdp), définissant les différents portions constitutives du contenu Cont1 ;
- une section dite "CDNI Logging interface" comprenant les valeurs de données de télémétrie attendues, une telle section est définie dans le document RFC 7937 publié par l'IETF.

Ces différents fichiers peuvent se présenter au format JavaScript *Object Notation* (JSON).

Quel que soit le mode de réalisation retenu, la synchronisation des registres locaux 12₁, 12₂, 12₃ embarqués dans chacun des nœuds N₁, N₂ et N₃ fonctionne au moyen d'un algorithme de consensus, nommé RAFT.

Le nœud instigateur N₁ étant à l'origine de la création du registre partagé SR, il est désigné comme maître du registre partagé SR sans passer par la traditionnelle phase d'élection d'un maitre comme cela est le cas dans un mode de fonctionnement classique de l'algorithme RAFT. La suppression de cette phase d'élection permet de raccourcir le temps nécessaire au démarrage du registre partagé SR.

Une fois le registre partagé relatif à la livraison du contenu Cont1 créé, le nœud instigateur fait la publicité de sa capacité à livrer le contenu Cont1.

Ainsi, dans l'étape E5, le terminal utilisateur 10 émet une demande de livraison RQT1 du contenu Cont1 à destination du nœud instigateur N₁. Le terminal utilisateur 10 a obtenu une adresse telle qu'une URL (*Uniform Resource Locator*) associée au contenu demandé par exemple via un moteur de recherche, ou encore via une application de vidéos à la demande, etc.

Préalablement à la transmission du contenu Cont1 à destination du terminal utilisateur 10, le nœud instigateur N₁ met en œuvre une étape E6 de négociation des conditions de transmission du contenu Cont1 avec les nœuds suiveurs N₂, N₃ notamment en fonction de la localisation du terminal utilisateur 10, par exemple en précisant si ce dernier se situe en intérieur ou en extérieur car cela impacte la qualité de la transmission.

Au cours de cette étape de négociation, des conditions de transmission matérialisées par des valeurs d'une ou plusieurs données de télémétrie associées à une transaction, telle qu'un paiement ou l'exécution d'un service, sont transmises par le nœud instigateur N₁ à destination des nœuds suiveurs N₂, N₃.

Les données de télémétrie appartiennent à un groupe comprenant entre autres :
- un délai de transit entre le nœud instigateur N₁, les nœuds suiveurs N₂, N₃ et le terminal utilisateur 10 d'un paquet de données constitutif du contenu Cont1,
- un identifiant d'au moins un module d'interconnexion 14 acheminant au moins un paquet de données constitutif du contenu Cont1 entre le nœud instigateur N₁, les nœuds suiveurs N₂, N₃ et le terminal utilisateur 10, l'identifiant pouvant avantageusement comprendre l'identifiant d'un opérateur assurant la gestion du module d'interconnexion,
- un horaire de transit d'un paquet de données constitutif du contenu Cont1 au travers d'un module d'interconnexion 14, correspondant au moment où le module d'interconnexion 14 reçoit, traite ou transmet le paquet de données,
- un délai de franchissement du module d'interconnexion 14 par un paquet de données constitutif du contenu Cont1,
- un délai de traitement d'un paquet de données constitutif du contenu par le module d'interconnexion 14,
- une qualité de service, représentative de la priorisation du paquet de données constitutif du contenu Cont1, cette qualité de service pouvant selon un exemple être représentée par une indication qualitative de traitement du paquet lors de son acheminement vers le terminal utilisateur 10,
- la réception sans perte ni retransmission d'un groupe de paquets de données constitutif du contenu Cont1,
- une combinaison des données de télémétrie individuelles du groupe citées ci-dessus.

Bien entendu, d'autres données de télémétrie peuvent être utilisées dans le cadre de la présente invention. Ainsi, une autre donnée de télémétrie concerne un paramètre représentatif d'une qualité d'expérience (aussi appelée QoE) de l'utilisateur de l'équipement utilisateur 10.

Dans une implémentation particulière, le terminal utilisateur 10 propose des valeurs données de télémétrie au nœud instigateur N₁ dans la demande RQT1. Les valeurs de données de télémétrie proposées par le terminal utilisateur 10 sont prises en considération par le nœud instigateur N₁ lors de l'étape de négociation E6.

Ainsi, le nœud instigateur N₁ et les nœuds suiveurs N₂, N₃ sélectionnent l'offre qui leur convient, c'est-à-dire qu'ils sélectionnent une ou plusieurs conditions de transmission qui correspondent à la situation du terminal utilisateur 10, par exemple la localisation en intérieur ou en extérieur du terminal utilisateur 10, la nature de la connexion du terminal utilisateur 10 avec un réseau de communication, i.e. filaire ou non filaire, Wi-Fi, Bluetooth, etc. et à son budget. De telles conditions de transmission sont matérialisées par des valeurs d'une ou plusieurs données de télémétrie décrites ci-dessus et associées à une transaction.

Au cours de cette étape E6, le registre local 12₁ du nœud instigateur N₁ transmet, à destination des registres locaux 12₂, 12₃ des nœuds suiveurs N₂, N₃, un jeu de valeurs de données de télémétrie obtenu à partir des valeurs de données de télémétrie fournies par le terminal utilisateur 10, des valeurs de données de télémétrie fournies par le nœud instigateur N₁ ainsi que les valeurs de données de télémétrie fournies par les nœuds suiveurs N₂, N₃ au cours de l'étape E4.

Ainsi, le terminal utilisateur 10 fournit des données relatives à sa connectivité ou à une qualité de service requise. Les nœuds N₁, N₂, N₃, quant à eux, déterminent par rapport à leurs capacités s'il leur est possible de satisfaire la demande du terminal utilisateur 10. A tire d'exemple, le terminal utilisateur 10 peut imposer une répartition de la livraison du contenu entre deux liens de nature différente : 30% du contenu est livré au travers d'une connexion WIFI et 70% du contenu est livré au travers d'une connexion de type 5G.

Les valeurs de télémétrie fournies peuvent également comprendre des contraintes de capacités, de volumes, d'encodages, etc. A cet effet, le terminal utilisateur 10 peut requérir que 5Mb soient livrés à hauteur de 30% du volume au travers d'une connexion de type 5G et 70% du volume au travers d'une connexion WIFI. Le nœud N₁ traduit ces contraintes en une répartition sur les deux autres nœuds N₂ et N₃ en fonction de leurs capacités respectives.

Ce jeu de valeurs de données de télémétrie est alors soumis à une validation par consensus. Si le jeu de valeurs de données de télémétrie est accepté alors la livraison est effectuée. Si, le jeu de valeurs de données de télémétrie n'est pas accepté, dans un premier cas de figure, la livraison du contenu n'est pas effectuée et le terminal utilisateur 10 se retourne vers un autre nœud que N₁ pouvant livrer le contenu. Dans un deuxième cas de figure, le terminal utilisateur 10 peut négocier de nouvelles valeurs de données de télémétrie avec des contraintes différentes.

Pour valider le jeu de valeurs de données de télémétrie par consensus, chaque registre local 12₂, 12₃ d'un nœud suiveur N₂, N₃ transmet une information de validation à destination du registre local 12₁ du nœud instigateur N₁. Si le nœud suiveur N₂, N₃ est capable de livrer une portion du contenu Cont1 conformément au jeu de valeurs de données de télémétrie proposé par le nœud instigateur N₁ l'information de validation est un acquittement, si le nœud suiveur N₂, N₃ est incapable de livrer une portion du contenu Cont1 conformément au jeu de valeurs de données de télémétrie proposé alors l'information de validation est un rejet.

Les informations de validation peuvent être pondérées, au moyen d'un coefficient de pondération, en fonction de l'identité et de la fonction du nœud qui les émet. A titre d'exemple non limitatif, un nœud suiveur N₂ servant d'origine pour le contenu Cont1 peut avoir un coefficient de pondération égal à deux lorsqu'il s'agit de valider des données relatives à une qualité d'expérience ou QoE voire à trois si sa fonction est d'insérer du contenu publicitaire dans un flux de données. Dans un autre exemple, un nœud servant uniquement de relai peut avoir un coefficient de pondération égal à ½.

Si la majorité, le cas échéant pondérée, des nœuds suiveurs N₂, N₃ acquittent le jeu de valeurs de données de télémétrie proposé par le nœud instigateur N₁, alors le registre local 12₁ du nœud instigateur N₁ valide le jeu de valeurs de données de télémétrie et déclenche la livraison du contenu conformément au jeu de valeurs de données de télémétrie validé. On parle alors des valeurs de données de télémétrie attendues car pour déclencher une éventuelle transaction, ce sont ces valeurs de données de télémétrie ainsi validées qui devront être respectées.

Dans un premier cas de figure, lorsque la majorité pondérée des nœuds suiveurs N₂, N₃ n'acquittent pas le jeu de valeurs de données de télémétrie proposé par le nœud instigateur N₁, alors le registre local 12₁ du nœud instigateur N₁ valide le rejet du jeu de valeurs de données de télémétrie proposé et, en fonction du mode de fonctionnement spécifié, rejette la livraison du contenu ou déclenche une nouvelle négociation des valeurs de données de télémétrie à appliquer à cette livraison.

Dans un deuxième cas de figure, lorsque la majorité, le cas échéant pondérée, des nœuds suiveurs N₂, N₃ n'acquittent pas le jeu de valeurs de données de télémétrie proposé par le nœud instigateur N₁, alors le registre local 12₁ du nœud instigateur N₁ valide cet état de fait, et le nœud instigateur N1 procède à la livraison du contenu conformément au jeu de valeurs de données de télémétrie validé uniquement avec les nœuds ayant acquitté le jeu de valeurs de données de télémétrie validé.

Dans tous les cas de figures, le registre local 12₁ du nœud instigateur N₁ informe chaque registre local 12₂, 12₃ des nœuds suiveurs N₂, N₃ de l'état d'acquittement du jeu de valeurs de données de télémétrie et de l'identité des nœuds participants à la livraison du contenu lorsque celle-ci est mise en œuvre.

Lorsqu'il est acté que la livraison du contenu est mise en œuvre, le nœud instigateur N₁ transmet, dans une étape E7, un message MGS1 à destination du terminal utilisateur 10 identifiant le jeu de valeurs de données de télémétrie validé lors de l'étape de négociation E6 (jeu de valeurs de données attendues au sens de l'invention).

Dans une implémentation particulière du procédé objet de l'invention, l'étape E6 peut être mise en œuvre préalablement à l'étape E5.

En réponse à la demande de livraison RQT1 du contenu Cont1, le nœud instigateur N₁ émet, à destination du terminal utilisateur 10, un ou plusieurs messages « *redirect »* RD dans une étape E8.

Chaque message RD comprend une URL pointant vers un nœud suiveur N₂, N₃ capable de livrer une ou plusieurs portions du contenu Cont1 demandé. Le message RD peut également comprendre, associées à chaque portion du contenu Cont1 identifiée, les valeurs de données de télémétrie attendues correspondantes.

Dans une étape E9, le terminal utilisateur 10 émet une demande de livraison RQT2 d'une première portion du contenu Cont1 à destination du nœud suiveur N₂ Une telle demande de livraison RQT2 comprend un identifiant de la portion du contenu Cont1 demandée au nœud suiveur N₂ et éventuellement les valeurs de données de télémétrie attendues correspondantes.

Dans une étape E10, le terminal utilisateur 10 émet une demande de livraison RQT3 d'une deuxième portion du contenu Cont1 destinée au nœud suiveur N₃, cette deuxième portion peut être identique à la première portion requise auprès du nœud N₂ ou différente. Une telle demande de livraison RQT3 comprend un identifiant de la portion du contenu Cont1 demandée au nœud suiveur N₃ et éventuellement les valeurs de données de télémétrie attendues correspondantes. La demande de livraison RQT3 est reçue par le module d'interconnexion 14 qui la transmet, dans une étape E11 à destination du nœud suiveur N₃.

Il convient de noter que les étapes E9 et E10 peuvent être mises en œuvre successivement ou en parallèle.

A réception des demandes de livraison RQT2, RQT3, chaque nœud concerné prépare la portion du contenu à livrer. Cette préparation consiste, entre autres, dans le mode de réalisation décrit ici, à insérer les données de télémétrie validées dans le flux de données transportant les données relatives au contenu à livrer.

Ainsi, dans une première implémentation, chaque nœud N₁, N₂, N₃ livrant une portion du contenu, génère au moins un flux de données comprenant des paquets de données constitutifs du contenu Cont1, des paquets de données transportant des données pour la mise en œuvre d'une transaction relative à la transmission d'une portion du contenu Cont1 et des paquets de données transportant une valeur d'une ou plusieurs données de télémétrie attendues destinées à être utilisées pour vérifier que les conditions d'acquittement de la livraison sont vérifiées. Les paquets de données transportant une valeur d'une ou plusieurs données de télémétrie attendues sont insérés au fil de l'eau dans les flux de données ainsi générés.

Dans une deuxième implémentation, chaque nœud N₁, N₂, N₃ livrant une portion du contenu génère un premier flux de données comprenant les paquets de données constitutifs du contenu Cont1, un deuxième flux de données comprenant les données transportant une valeur d'une ou plusieurs données de télémétrie attendues, et éventuellement, un troisième flux de données comprenant les données pour la mise en œuvre d'une transaction relative à la transmission du contenu Cont1. Ces trois flux de données sont ensuite multiplexés en vue de leur transmission à destination du terminal utilisateur 10. Selon un exemple, chacun de ces trois flux de données peut prendre la forme d'un *« stream* » conforme au protocole QUIC (*Quick UDP Internet Connections*)*,* en cours de normalisation à l'IETF (*Internet Engineering Task Force*), les trois streams obtenus étant ensuite multiplexés.

Dans une troisième implémentation, chaque nœud N₁, N₂, N₃ livrant une portion du contenu génère un premier flux de données comprenant les paquets de données constitutifs du contenu Cont1 et un deuxième flux de données de signalisation dans lequel sont transportées les données transportant une valeur d'une ou plusieurs données de télémétrie attendues, et éventuellement, des données comprenant les données pour la mise en œuvre d'une transaction relative à la transmission du contenu Cont1. Selon un exemple, de tels paquets de données constitutifs du flux de données de signalisation sont par exemple des paquets de données de type *TLS ClientHello* et *ServerHello* définis dans le protocole QUIC.

Dans une quatrième implémentation, chaque nœud N₁, N₂, N₃ livrant une portion du contenu génère un flux de données comprenant des groupes d'images (GoP) constitutifs du contenu Cont1 compressé et un deuxième flux de données de signalisation dans lequel sont transportés les paquets de données transportant une valeur d'une ou plusieurs données de télémétrie attendues mesurant la bonne réception de la première image du groupe d'images, et éventuellement, des paquets de données comprenant les données pour la mise en œuvre d'une transaction relative à la transmission du contenu Cont1. De tels paquets de données constitutifs du flux de données de signalisation sont par exemple des paquets de données de type *TLS ClientHello* et *ServerHello* définis comme CHO et SHO dans le protocole QUIC. Dans cette quatrième implémentation, la livraison n'est acquittée que lorsqu'un groupe de paquets constituant la première image du groupe d'images est reçu par le terminal utilisateur sans perte ni retransmission.

Dans les étapes E12 à E14, le terminal utilisateur 10 reçoit, selon l'une des implémentations décrites ci-dessus, en provenance respectivement du nœud instigateur N₁, du nœud suiveur N₂ et du nœud suiveur N₃, les portions du contenu Cont1 demandées. Dans l'exemple de mise en œuvre décrit, la portion du contenu Cont1 livrée par le nœud N₃ est relayée par le module d'interconnexion 14.

Dans une étape E15, des valeurs de données de télémétrie effectives relatives à la livraison des différentes portions du contenu Cont1 sont inscrites dans le registre instigateur 12₁. Ces valeurs de données de télémétrie effectives peuvent être fournies par le terminal utilisateur 10, par les nœuds N₁, N₂, N₃ livrant le contenu, par d'autres nœuds impliqués dans la livraison du contenu ayant uniquement des fonctions de mesure des valeurs de données de télémétrie, par le module d'interconnexion 14, etc. Ces valeurs de données de télémétrie effectives inscrites dans le registre instigateur 12₁ sont accompagnées d'informations permettant de vérifier leur intégrité. De telles informations permettant de vérifier leur intégrité sont par exemple, un identifiant du nœud ayant fourni ces valeurs de données de télémétrie effectives, un hash (condensé) des valeurs de données de télémétrie effectives complétées éventuellement d'un identifiant du nœud ayant fourni ces valeurs de données de télémétrie effectives, une fonction du nœud ayant fourni ces valeurs de données de télémétrie effectives, etc.

Dans une implémentation particulière de la présente solution, ces informations permettant de vérifier l'intégrité des valeurs de données de télémétrie effectives peuvent influer sur la valeur du coefficient de pondération associé à un nœud donné. Ainsi un nœud dont l'intégrité ne saurait être remise en cause, tel que le nœud instigateur N₁, peut être associé à un fort coefficient de pondération.

Dans une étape E16, le registre local 12₁ du nœud instigateur N₁ procède à la vérification de la conformité des conditions de transmission effectives du contenu aux conditions de transmission attendues du contenu négociées au cours de l'étape E6, en comparant les données de télémétrie effectives avec les données de télémétrie attendues.

Ainsi, dans un premier exemple de mise en œuvre, lorsqu'une des données de télémétrie utilisée est un délai de transit d'un paquet de données constitutif du contenu, le registre local 12₁ du nœud instigateur N₁ détermine un délai d'errance représentatif d'un écart entre un délai de transit effectif du paquet de données en question et un délai de transit attendu négocié au cours de l'étape E6.

Lorsque le registre local 12₁ du nœud instigateur N₁ détermine que la valeur du délai d'errance est inférieure à un seuil négocié par exemple également au cours de l'étape E6, le délai de transit effectif et le délai de transit attendu correspondent. Les conditions de transmission effectives sont alors considérées comme conformes aux conditions de transmission attendues.

Dans un deuxième exemple de mise en œuvre, lorsqu'une des données de télémétrie est un horaire de transmission du paquet de données du contenu, le registre local 12₁ du nœud instigateur N₁ mesure un écart entre un horaire de transit effectif d'un paquet de données constitutif du contenu au travers du module d'interconnexion 14, et un horaire de transit attendu d'un paquet de données constitutif du contenu au travers du module d'interconnexion 14. Lorsque l'écart ainsi déterminé est inférieur à un seuil négocié par exemple au cours de l'étape E6, l'horaire de transit effectif et l'horaire de transit attendu correspondent. Les conditions de transmission effectives sont alors considérées comme conformes aux conditions de transmission attendues.

Dans un troisième exemple de mise en œuvre, lorsqu'une des données de télémétrie est un identifiant d'au moins un module d'interconnexion 14 au travers duquel un paquet de données constitutif du contenu doit transiter au cours de sa transmission à destination du terminal utilisateur 10, le registre local 12₁ du nœud instigateur N₁ vérifie la présence de paquets de données introduits dans le contenu par le module d'interconnexion 14 et comprenant un identifiant du module d'interconnexion 14. Si un tel identifiant du module d'interconnexion 14 est présent, alors les conditions de transmission effectives sont considérées comme conformes aux conditions de transmission attendues.

Le module d'interconnexion 14 peut également insérer des informations temporelles telles que, par exemple, des horaires de passages, des temps de traversée, des temps de traitement d'une séquence précédente de paquets de données, etc., dans les paquets de données qu'ils introduisent dans le contenu afin de permettre au registre local 12₁ du nœud instigateur N₁ de vérifier la conformité à d'autres conditions de transmission.

Dans un quatrième exemple, lorsqu'une des données de télémétrie est la clé cryptographique créée par l'application de livraison de contenus à partir des valeurs des données de télémétrie attendues validées lors de l'étape de négociation E6, le registre local 12₁ du nœud instigateur N₁ détermine une clé cryptographique « effective » à partir des données de télémétrie effectives. Si la clé cryptographique « effective » ainsi obtenue correspond à la clé cryptographique créée par l'application de livraison de contenus alors les conditions de transmission effectives sont considérées comme conformes aux conditions de transmission attendues.

Les quatre exemples de mise en œuvre précédemment décrits peuvent être mis en œuvre conjointement.

Dans le même temps, dans le mode de réalisation décrit ici, le registre local 12₁ du nœud instigateur N₁ transmet, à destination des registres locaux 12₂, 12₃ des nœuds suiveurs N₂, N₃, les valeurs de données de télémétrie effectives collectées au cours de l'étape E15, déclenchant le processus de validation par consensus de ces données

Chaque registre local 12₂, 12₃ d'un nœud suiveur N₂, N₃ procède alors à sa propre vérification des valeurs de données de télémétrie effectives collectées en comparant les valeurs de données de télémétrie effectives dont il dispose avec les valeurs de données de télémétrie attendues, et transmet une information de validation à destination du registre local 12₁ du nœud instigateur N₁. Si le nœud suiveur N₂, N₃ estime lui aussi que les valeurs de données de télémétrie effectives correspondent aux valeurs de données de télémétrie attendues, il valide ces informations et émet un acquittement. Si le nœud suiveur N₂, N₃ estime que les valeurs de données de télémétrie effectives ne correspondent pas aux valeurs de données de télémétrie attendues, il invalide ces informations et émet un rejet.

Lorsque les valeurs de données de télémétrie effectives inscrites dans le registre instigateur 12₁ sont accompagnées d'informations permettant de vérifier leur intégrité, cette dernière est également vérifiée par chacun des registre locaux 12₂, 12₃, avant de procéder à leur validation.

Si lorsque le nœud suiveur N₂, N₃ estime que les valeurs de données de télémétrie effectives correspondent aux valeurs de données de télémétrie attendues et que les informations permettant de vérifier leur intégrité sont également valides, il émet un acquittement.

Dans le cas de figure où le nœud suiveur N₂, N₃ estime qu'au moins l'une des informations permettant de vérifier l'intégrité des valeurs de données de télémétrie effectives n'est pas valide car elle correspond, par exemple, à un nœud non référencé, alors le registre local 12₂, 12₃ d'un nœud suiveur N₂, N₃ invalide ces informations et émet un rejet. En effet, il suffit que l'une des informations permettant de vérifier l'intégrité des valeurs de données de télémétrie effectives ne soit pas valide pour compromettre l'intégrité de toutes les données mémorisées dans le registre partagé. On note que dans le mode de réalisation décrit ici, le nœud N₁ transmet aux autres nœuds N₂, N₃ les valeurs de données de télémétrie effectives collectées lors de l'étape E15. En variante, nœud N₁ peut transmettre aux autres nœuds N₂, N₃ le résultat de ses comparaisons entre les valeurs de données de télémétrie effectives collectées lors de l'étape E15 et les valeurs de données de télémétrie attendues, et éventuellement des informations permettant de vérifier l'intégrité de ces résultats de comparaison. Dans ce cas, les nœuds suiveurs N₂, N₃ compare leurs propres résultats de comparaison et transmettent un acquittement vers le nœud N₁ s'ils obtiennent les mêmes résultats que le nœud N₁, ou un rejet sinon. S'ils disposent d'informations permettant de vérifier l'intégrité des résultats de comparaison reçus du nœud N₁, ils procèdent à cette vérification.

Lorsque la majorité, éventuellement pondérée, des nœuds suiveurs N₂, N₃ n'acquittent pas le jeu de valeurs de données de télémétrie effectif, alors le registre local 12₁ du nœud instigateur N₁ valide le rejet de la livraison du contenu.

Si malgré tout, le contenu a été effectivement reçu par le terminal utilisateur 10, une transaction déclenchée peut être le paiement d'un crédit afin de compenser le non-respect des conditions de livraison, ou la livraison à titre gratuit d'un autre contenu.

Dans le cas de figure où le contenu n'a pas pu être livré au terminal utilisateur, le nœud instigateur N1 peut déclencher une nouvelle livraison sur la base des mêmes valeurs de télémétrie attendues ou sur la base de nouvelles valeurs de télémétrie attendue préalablement validées par consensus.

Si la majorité, éventuellement pondérée, des nœuds suiveurs N₂, N₃ acquittent les valeurs de données de télémétrie effectives, alors le registre local 12₁ du nœud instigateur N₁ acquitte la livraison du contenu.

Le registre local 12₁ du nœud instigateur N₁ informe alors chaque registre local 12₂, 12₃ des nœuds suiveurs N₂, N₃ que les valeurs de données de télémétrie effectives sont validées, et que par conséquent la livraison du contenu Cont1 est acquittée.

Le nœud instigateur N₁ déclenche alors les transactions relatives à livraison du contenu Cont1 dans une étape E16.

On note qu'en cas de défaillance du nœud instigateur N₁, ou lorsque les nœuds suiveurs N₂, N₃ estiment que le nœud instigateur N₁ ne remplit pas ses fonctions de manière satisfaisante, les nœuds suiveurs N₂, N₃, peuvent provoquer l'élection d'un nouveau nœud instigateur. Un tel mécanisme d'élection d'un nouveau nœud instigateur est un mécanisme classique de l'algorithme RAFT.

Dans une étape E17, le nœud instigateur N₁ émet un message d'acquittement ACK à destination des nœuds N₂, N₃ et du module d'interconnexion 14 indiquant que le contenu Cont1 a été livré conformément aux valeurs de télémétrie attendues. Ceci peut prendre la forme d'un reçu de paiement matérialisant la réalisation de la transaction de paiement, ou d'un message indiquant que le service demandé a été rendu et que la transaction correspondante a été effectuée.

Dans le cas où les valeurs de télémétrie effectives sont considérées comme non conformes aux valeurs de télémétrie attendues, le nœud instigateur N₁ émet, dans une étape E18, un message d'échec NACK à destination du nœud concerné, ici N₃, indiquant que si le contenu a été livré au terminal utilisateur 10, la livraison de sa portion ne s'est pas déroulée conformément aux valeurs de télémétrie attendues.

Dans ce cas de figure, soit la transaction n'est pas déclenchée et l'opérateur du réseau de diffusion de contenus CDN auquel appartient le nœud N₃ ne perçoit aucune contrepartie pour cette livraison, soit l'opérateur du réseau de diffusion de contenus CDN perçoit, malgré tout, une contrepartie pour cette livraison, mais moindre . Une telle contrepartie moindre peut être une transaction correspondant à une rémunération inférieure à la rémunération maximale pouvant être perçue lorsque l'ensemble des valeurs de données de télémétrie sont respectées.

Le message d'échec NACK peut également comprendre une invitation à mettre en œuvre une nouvelle livraison de la portion du contenu avec des nouvelles valeurs de télémétrie attendues.

Lorsque le contenu Cont1 n'est plus disponible, le registre partagé SR est clos et archivé. S'il reste des transactions à déclencher, le registre local 12₁ du nœud instigateur N₁ procède à leur traitement avant de clôturer le registre partagé SR.

La [fig. 3] représente un nœud N₁, N₂, N₃ selon un mode de réalisation de l'invention. Un tel nœud N₁, N₂, N₃ est apte à mettre en œuvre le procédé de contrôle de la livraison d'un contenu selon la figure 2.

Un nœud N₁, N₂, N₃ peut comprendre au moins un processeur matériel 31, une unité de stockage 32, un dispositif de saisie 33, un dispositif d'affichage 34, et au moins une interface de réseau 35 qui sont connectés entre eux au travers d'un bus 36. Bien entendu, les éléments constitutifs du nœud N₁, N₂, N₃ peuvent être connectés au moyen d'une connexion autre qu'un bus.

Le processeur 31 commande les opérations du nœud N₁, N₂, N₃. L'unité de stockage 32 stocke au moins un programme pour la mise en œuvre du procédé selon un mode de réalisation de l'invention à exécuter par le processeur 31, et diverses données, telles que des paramètres utilisés pour des calculs effectués par le processeur 31, des données intermédiaires de calculs effectués par le processeur 31, etc. Le processeur 31 peut être formé par tout matériel ou logiciel connu et approprié, ou par une combinaison de matériel et de logiciel. Par exemple, le processeur 31 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 32 peut être formée par n'importe quel moyen approprié capable de stocker le programme ou les programmes et des données d'une manière lisible par un ordinateur. Des exemples d'unité de stockage 32 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 33 peut être formé par un clavier, un dispositif de pointage tel qu'une souris à utiliser par un utilisateur pour entrer des commandes. Le dispositif d'affichage 34 peut être également formé par un module d'affichage, tel que par exemple une interface graphique utilisateur ou GUI (pour *Graphical User Interface*)*.*

L'interface réseau 35 fournit une connexion entre le nœud N₁, N₂, N₃, le module d'interconnexion 14 ou le module de synchronisation 13.

## Revendications

1. Procédé de contrôle d'une livraison d'un contenu vers un terminal utilisateur (10) effectuée par une pluralité de nœuds (N1-N3) appartenant à au moins un réseau de livraison de contenus, lesdits nœuds pouvant livrer une ou plusieurs portions du contenu, ledit procédé étant mis en œuvre par un premier nœud dit nœud instigateur (N1) sélectionné parmi la pluralité de nœuds et comprenant les étapes suivantes :
- calcul des résultats de comparaisons, pour une pluralité de portions du contenu livrées, de valeurs d'au moins une donnée de télémétrie effective avec des valeurs correspondantes d'au moins une donnée de télémétrie attendue,
et **caractérisé par** les étapes supplémentaires suivantes:
- réception d'au moins un résultat des mêmes comparaisons effectuées par au moins un deuxième nœud, dit nœud suiveur (N2-N3), sélectionné parmi la pluralité de nœuds,
- acquittement de la livraison de portions du contenu lorsqu'au moins une majorité des résultats de comparaison obtenus indiquent une conformité des valeurs d'au moins une donnée de télémétrie effective avec les valeurs correspondantes d'au moins une donnée de télémétrie attendue.

2. Procédé de contrôle d'une livraison d'un contenu selon la revendication 1 dans lequel les résultats de comparaison sont pondérés pour déterminer si une majorité des résultats de comparaison obtenus indiquent une dite conformité.

3. Procédé de contrôle d'une livraison d'un contenu selon la revendication 2 dans lequel une valeur d'un coefficient de pondération à appliquer aux résultats de comparaison dépend d'au moins une fonction mise en œuvre par des nœuds appartenant à la pluralité de nœuds.

4. Procédé de contrôle d'une livraison d'un contenu selon les revendications 1 ou 2 dans lequel les résultats de comparaison et/ou ladite au moins une donnée de télémétrie effective sont accompagnés d'au moins une information permettant de vérifier leur intégrité.

5. Procédé de contrôle d'une livraison d'un contenu selon la revendication 4 dans lequel, lorsque l'intégrité d'au moins l'un des résultats de comparaison et/ou d'au moins une donnée de télémétrie effective n'est pas vérifiée, la livraison de portions du contenu n'est pas acquittée.

6. Procédé de contrôle d'une livraison d'un contenu selon l'une quelconque des revendications 4 à 5 dans lequel une information permettant de vérifier l'intégrité des résultats de comparaison et/ou de ladite au moins une donnée de télémétrie effective comprend une liste comprenant des identifiants de nœuds appartenant à la pluralité de nœuds et/ou comprend un condensé des données constitutives d'au moins des résultats de comparaison et/ou de ladite au moins une donnée de télémétrie effective, et/ou est relative à au moins une fonction mise en œuvre par des nœuds appartenant à la pluralité de nœuds.

7. Procédé de contrôle d'une livraison d'un contenu selon l'une quelconque des revendications 1 à 6 comprenant, préalablement à la livraison de portions du contenu une étape de création d'un registre partagé destiné à mémoriser des données relatives à la livraison de portions du contenu et à valider des données de télémétrie relatives à la livraison de portions du contenu.

8. Procédé de contrôle d'une livraison d'un contenu selon la revendication 7 dans lequel l'étape de création du registre partagé comprend les étapes suivantes :
- diffusion d'un message comprenant une adresse d'un registre local du nœud instigateur relatif à la livraison du contenu,
- réception d'une demande d'établissement d'une connexion entre le registre local du nœud instigateur et un registre local d'au moins un nœud suiveur au travers de laquelle les données relatives à la livraison du contenu sont échangées.

9. Procédé de contrôle d'une livraison d'un contenu selon l'une quelconque des revendications précédentes dans lequel l'acquittement de la livraison de portions du contenu déclenche une transaction de paiement.

10. Procédé de contrôle d'une livraison d'un contenu selon l'une quelconque des revendications précédentes dans lequel une donnée de télémétrie appartient à un groupe comprenant entre autres :
- un délai de transit entre le nœud instigateur, les nœuds suiveurs et le terminal utilisateur d'un paquet de données constitutif du contenu,
- un identifiant d'au moins un module d'interconnexion acheminant au moins un paquet de données constitutif du contenu entre le nœud instigateur, les nœuds suiveurs et le terminal utilisateur, l'identifiant pouvant avantageusement comprendre l'identifiant d'un opérateur assurant la gestion du module d'interconnexion,
- un horaire de transit d'un paquet de données constitutif du contenu au travers d'un module d'interconnexion, correspondant au moment où le module d'interconnexion reçoit, traite ou transmet le paquet de données,
- un délai de franchissement du module d'interconnexion par un paquet de données constitutif du contenu,
- un délai de traitement d'un paquet de données constitutif du contenu par le module d'interconnexion,
- une qualité de service, représentative de la priorisation du paquet de données constitutif du contenu, cette qualité de service pouvant selon un exemple être représentée par une indication qualitative de traitement du paquet lors de son acheminement vers le terminal utilisateur,
- la réception sans perte ni retransmission d'un groupe de paquets de données constitutif du contenu,
- une combinaison des données de télémétrie individuelles du groupe citées ci-dessus.

11. Nœud d'un réseau de livraison de contenus, dit nœud instigateur (N1), capable de contrôler une livraison d'un contenu vers un terminal utilisateur 10 effectuée par une pluralité d'autres nœuds (N1-N3), lesdits nœuds pouvant livrer une ou plusieurs portions du contenu, ledit nœud instigateur comprenant des moyens pour :
- comparer, pour une pluralité de portions du contenu livrées, des valeurs d'au moins une donnée de télémétrie effective avec des valeurs correspondantes d'au moins une donnée de télémétrie attendue,
et **caractérisé par** des moyens pour :
- recevoir au moins un résultat des mêmes comparaisons effectuées par au moins un deuxième nœud, dit nœud suiveur (N2-N3), sélectionné parmi la pluralité de nœuds,
- acquitter la livraison de portions du contenu lorsqu'au moins une majorité des résultats de comparaison obtenus indiquent une conformité des valeurs d'au moins une donnée de télémétrie effective avec les valeurs d'au moins une donnée de télémétrie attendue.

12. Produit programme d'ordinateur comprenant des instructions de code de programme pour la mise en œuvre d'un procédé de contrôle d'une livraison d'un contenu selon la revendication 1, lorsqu'il est exécuté par un processeur.

13. Système comprenant au moins un terminal utilisateur (10) et une pluralité de nœuds (N1-N3) appartenant à au moins un réseau de livraison de contenus, lesdits nœuds pouvant livrer une ou plusieurs portions d'un contenu vers ledit terminal utilisateur, ledit système étant tel qu'un premier nœud dit nœud instigateur (N1) sélectionné parmi la pluralité de nœuds, comprend des moyens pour :
- calculer des résultats de comparaisons, pour une pluralité de portions du contenu livrées, des valeurs d'au moins une donnée de télémétrie effective avec des valeurs correspondantes d'au moins une donnée de télémétrie attendue,
et **caractérisé par** des moyens pour :
- recevoir au moins un résultat des mêmes comparaisons effectuées par au moins un deuxième nœud, dit nœud suiveur (N2-N3), sélectionné parmi la pluralité de nœuds,
- acquitter la livraison du contenu lorsqu'au moins une majorité des résultats de comparaison obtenus indiquent une conformité des valeurs d'au moins une donnée de télémétrie effective avec les valeurs correspondantes d'au moins une donnée de télémétrie attendue.

## Patentansprüche

1. Verfahren zur Prüfung einer Lieferung eines Inhalts zu einem Benutzerendgerät (10), die von einer Mehrzahl von Knoten (N1-N3) vorgenommen wird, die zu mindestens einem Inhalteliefernetzwerk gehören, wobei die Knoten einen oder mehrere Abschnitte des Inhalts liefern können, wobei das Verfahren von einem ersten Knoten, Veranlasserknoten (N1) genannt, der unter der Mehrzahl der Knoten ausgewählt ist, durchgeführt wird und die folgenden Schritte umfasst:
- Berechnen der Ergebnisse von Vergleichen, für eine Mehrzahl von gelieferten Abschnitten des Inhalts, von Werten mindestens eines tatsächlichen Telemetriedatenelements mit entsprechenden Werten mindestens eines erwarteten Telemetriedatenelements,
und durch die folgenden zusätzlichen Schritte gekennzeichnet ist:
- Empfangen mindestens eines Ergebnisses der gleichen Vergleiche, die von mindestens einem zweiten Knoten, Folgeknoten (N2-N3) genannt, der unter der Mehrzahl von Knoten ausgewählt ist, vorgenommen werden,
- Quittieren der Lieferung von Abschnitten des Inhalts, wenn mindestens eine Mehrheit der erhaltenen Vergleichsergebnisse eine Übereinstimmung der Werte mindestens eines tatsächlichen Telemetriedatenelements mit den entsprechenden Werten mindestens eines erwarteten Telemetriedatenelements angeben.

2. Verfahren zur Prüfung einer Lieferung eines Inhalts nach Anspruch 1, wobei die Vergleichsergebnisse gewichtet werden, um zu bestimmen, ob eine Mehrheit der erhaltenen Vergleichsergebnisse eine solche Übereinstimmung angeben.

3. Verfahren zur Prüfung einer Lieferung eines Inhalts nach Anspruch 2, wobei ein Wert eines Gewichtungskoeffizienten, der auf die Vergleichsergebnisse anzuwenden ist, von mindestens einer Funktion abhängt, die von zu der Mehrzahl von Knoten gehörenden Knoten durchgeführt wird.

4. Verfahren zur Prüfung einer Lieferung eines Inhalts nach den Ansprüchen 1 oder 2, wobei die Vergleichsergebnisse und/oder das mindestens eine tatsächliche Telemetriedatenelement mit mindestens einer Information einhergehen, die es ermöglicht, ihre Integrität nachzuweisen.

5. Verfahren zur Prüfung einer Lieferung eines Inhalts nach Anspruch 4, wobei, wenn die Integrität mindestens eines der Vergleichsergebnisse und/oder mindestens eines tatsächlichen Telemetriedatenelements nicht nachgewiesen ist, die Lieferung von Abschnitten des Inhalts nicht quittiert wird.

6. Verfahren zur Prüfung einer Lieferung eines Inhalts nach einem der Ansprüche 4 bis 5, wobei eine Information, die es ermöglicht, die Integrität der Vergleichsergebnisse und/oder des mindestens einen tatsächlichen Telemetriedatenelements nachzuweisen, eine Liste umfasst, die Kennungen von zu der Mehrzahl von Knoten gehörenden Knoten umfasst, und/oder ein Digest der Daten, die mindestens Vergleichsergebnisse bilden, und/oder des mindestens einen tatsächlichen Telemetriedatenelements umfasst, und/oder sich auf mindestens eine Funktion bezieht, die von zu der Mehrzahl von Knoten gehörenden Knoten durchgeführt wird.

7. Verfahren zur Prüfung einer Lieferung eines Inhalts nach einem der Ansprüche 1 bis 6, umfassend, vor der Lieferung von Abschnitten eines Inhalts, einen Schritt des Erstellens eines geteilten Verzeichnisses, das dazu bestimmt ist, Daten bezüglich der Lieferung von Abschnitten des Inhalts zu speichern und Telemetriedatenelemente bezüglich der Lieferung von Abschnitten des Inhalts zu validieren.

8. Verfahren zur Prüfung einer Lieferung eines Inhaltsnach Anspruch 7, wobei der Schritt des Erstellens des geteilten Verzeichnisses die folgenden Schritte umfasst:
- Aussenden einer Nachricht, die eine Adresse eines lokalen Verzeichnisses des Veranlasserknotens bezüglich der Lieferung des Inhalts umfasst,
- Empfangen einer Anforderung des Aufbauens einer Verbindung zwischen dem lokalen Verzeichnis des Veranlasserknotens und einem lokalen Verzeichnis mindestens eines Folgeknotens, über welche die Daten bezüglich der Lieferung des Inhalts ausgetauscht werden.

9. Verfahren zur Prüfung einer Lieferung eines Inhalts nach einem der vorhergehenden Ansprüche, wobei das Quittieren der Lieferung von Abschnitten des Inhalts eine Bezahltransaktion auslöst.

10. Verfahren zur Prüfung einer Lieferung eines Inhalts nach einem der vorhergehenden Ansprüche, wobei ein Telemetriedatenelement zu einer Gruppe gehört, die unter anderem umfasst:
- eine Transitzeit zwischen dem Veranlasserknoten, den Folgeknoten und dem Benutzerendgerät eines den Inhalt bildenden Datenpakets,
- eine Kennung mindestens eines Verbindungsmoduls, das mindestens ein den Inhalt bildendes Datenpaket zwischen dem Veranlasserknoten, den Folgeknoten und dem Benutzerendgerät weiterleitet, wobei die Kennung vorteilhafterweise die Kennung eines Betreibers umfassen kann, der die Verwaltung des Verbindungsmoduls gewährleistet,
- einen Transitzeitplan eines den Inhalt bildenden Datenpakets durch ein Verbindungsmodul, entsprechend dem Zeitpunkt, zu dem das Verbindungsmodul das Datenpaket empfängt, verarbeitet, oder überträgt,
- eine Durchlaufzeit des Verbindungsmoduls durch ein den Inhalt bildendes Datenpaket,
- eine Verarbeitungszeit eines den Inhalt bildenden Datenpakets durch das Verbindungsmodul,
- eine Dienstgüte, die für die Priorisierung des den Inhalt bildenden Datenpakets repräsentativ ist, wobei diese Dienstgüte gemäß einem Beispiel durch eine qualitative Verarbeitungsangabe des Pakets bei seiner Weiterleitung zu dem Benutzerendgerät repräsentiert werden kann,
- das Empfangen ohne Verlust oder Sendewiederholung einer den Inhalt bildenden Gruppe von Datenpaketen,
- eine Kombination der oben genannten individuellen Telemetriedatenelemente der Gruppe.

11. Knoten eines Inhalteliefernetzwerks, Veranlasserknoten (N1) genannt, der in der Lage ist, eine Lieferung eines Inhalts zu einem Benutzerendgerät 10 zu prüfen, die von einer Mehrzahl von anderen Knoten (N1-N3) vorgenommen wird, wobei die Knoten einen oder mehrere Abschnitte des Inhalts liefern können, wobei der Veranlasserknoten Mittel umfasst zum:
- Vergleichen, für eine Mehrzahl von gelieferten Abschnitten des Inhalts, der Werte mindestens eines tatsächlichen Telemetriedatenelements mit entsprechenden Werten mindestens eines erwarteten Telemetriedatenelements,
und **gekennzeichnet ist durch** Mittel zum:
- Empfangen mindestens eines Ergebnisses der gleichen Vergleiche, die von mindestens einem zweiten Knoten, Folgeknoten (N2-N3) genannt, der unter der Mehrzahl von Knoten ausgewählt ist, vorgenommen werden,
- Quittieren der Lieferung von Abschnitten des Inhalts, wenn mindestens eine Mehrheit der erhaltenen Vergleichsergebnisse eine Übereinstimmung der Werte mindestens eines tatsächlichen Telemetriedatenelements mit den Werten mindestens eines erwarteten Telemetriedatenelements angeben.

12. Computerprogrammprodukt, umfassend Programmcodeanweisungen zur Durchführung eines Verfahrens zur Prüfung einer Lieferung eines Inhalts nach Anspruch 1, wenn es von einem Prozessor ausgeführt wird.

13. System, umfassend mindestens ein Benutzerendgerät (10) und eine Mehrzahl von Knoten (N1-N3), die zu mindestens einem Inhalteliefernetzwerk gehören, wobei die Knoten einen oder mehrere Abschnitte des Inhalts zu dem Benutzerendgerät liefern können, wobei das System dergestalt ist, dass ein erster Knoten, Veranlasserknoten (N1) genannt, der unter der Mehrzahl der Knoten ausgewählt ist, Mittel umfasst zum:
- Berechnen der Ergebnisse von Vergleichen, für eine Mehrzahl von gelieferten Abschnitten des Inhalts, der Werte mindestens eines tatsächlichen Telemetriedatenelements mit entsprechenden Werten mindestens eines erwarteten Telemetriedatenelements,
und **gekennzeichnet ist durch** Mittel zum:
- Empfangen mindestens eines Ergebnisses der gleichen Vergleiche, die von mindestens einem zweiten Knoten, Folgeknoten (N2-N3) genannt, der unter der Mehrzahl von Knoten ausgewählt ist, vorgenommen werden,
- Quittieren der Lieferung des Inhalts, wenn mindestens eine Mehrheit der erhaltenen Vergleichsergebnisse eine Übereinstimmung der Werte mindestens eines tatsächlichen Telemetriedatenelements mit den entsprechenden Werten mindestens eines erwarteten Telemetriedatenelements angeben.

## Claims

1. Method for checking delivery of content to a user terminal (10) performed by a plurality of nodes (N1-N3) belonging to at least one content delivery network, said nodes being able to deliver one or more portions of the content, said method being implemented by a first node, called instigator node (N1), selected from the plurality of nodes and comprising the following steps:
- calculating the results of comparisons, for a plurality of portions of the delivered content, of values of at least one actual telemetry datum with corresponding values of at least one expected telemetry datum,
and **characterized by** the following additional steps:
- receiving at least one result of the same comparisons made by at least one second node, called follower node (N2-N3), selected from the plurality of nodes,
- acknowledging the delivery of portions of the content when at least a majority of the comparison results obtained indicate conformity of the values of at least one actual telemetry datum with the corresponding values of at least one expected telemetry datum.

2. Method for checking delivery of content according to Claim 1, wherein the comparison results are weighted so as to determine whether a majority of the comparison results obtained indicate said conformity.

3. Method for checking delivery of content according to Claim 2, wherein a value of a weighting coefficient to be applied to the comparison results depends on at least one function implemented by nodes belonging to the plurality of nodes.

4. Method for checking delivery of content according to Claim 1 or 2, wherein the comparison results and/or said at least one actual telemetry datum are accompanied by at least one piece of information making it possible to verify their integrity.

5. Method for checking delivery of content according to Claim 4, wherein, when the integrity of at least one of the comparison results and/or of at least one actual telemetry datum is not verified, the delivery of portions of the content is not acknowledged.

6. Method for checking delivery of content according to either one of Claims 4 and 5, wherein a piece of information making it possible to verify the integrity of the comparison results and/or of said at least one actual telemetry datum comprises a list comprising identifiers of nodes belonging to the plurality of nodes and/or comprises a summary of the data constituting at least the comparison results and/or said at least one actual telemetry datum, and/or relates to at least one function implemented by nodes belonging to the plurality of nodes.

7. Method for checking delivery of content according to any one of Claims 1 to 6, comprising, prior to the delivery of portions of the content, a step of creating a shared register intended to store data relating to the delivery of portions of the content and to validate telemetry data relating to the delivery of portions of the content.

8. Method for checking delivery of content according to Claim 7, wherein the step of creating the shared register comprises the following steps:
- broadcasting a message comprising an address of a local register of the instigator node relating to the delivery of the content,
- receiving a request to establish a connection between the local register of the instigator node and a local register of at least one follower node through which the data relating to the delivery of the content are exchanged.

9. Method for checking delivery of content according to any one of the preceding claims, wherein the acknowledgment of the delivery of portions of the content triggers a payment transaction.

10. Method for checking delivery of content according to any one of the preceding claims, wherein a telemetry datum belongs to a group comprising inter alia:
- a transit delay between the instigator node, the follower nodes and the user terminal of a data packet constituting the content,
- an identifier of at least one interconnection module routing at least one data packet constituting the content between the instigator node, the follower nodes and the user terminal, the identifier being able to advantageously comprise the identifier of an operator responsible for managing the interconnection module,
- a transit schedule of a data packet constituting the content through an interconnection module, corresponding to the moment at which the interconnection module receives, processes or transmits the data packet,
- a delay in crossing the interconnection module by a data packet constituting the content,
- a delay in processing a data packet constituting the content by the interconnection module,
- a quality of service, representative of the prioritization of the data packet constituting the content, this quality of service being able, according to one example, to be represented by a qualitative indication of processing of the packet during its routing to the user terminal,
- the reception, without loss or retransmission, of a group of data packets constituting the content,
- a combination of the individual telemetry data of the group mentioned above.

11. Node of a content delivery network, called instigator node (N1), capable of checking delivery of content to a user terminal 10 performed by a plurality of other nodes (N1-N3), said nodes being able to deliver one or more portions of the content, said instigator node comprising means for:
- comparing, for a plurality of portions of the delivered content, values of at least one actual telemetry datum with corresponding values of at least one expected telemetry datum,
and **characterized by** means for:
- receiving at least one result of the same comparisons made by at least one second node, called follower node (N2-N3), selected from the plurality of nodes,
- acknowledging the delivery of portions of the content when at least a majority of the comparison results obtained indicate conformity of the values of at least one actual telemetry datum with the values of at least one expected telemetry datum.

12. Computer program product comprising program code instructions for implementing a method for checking delivery of content according to Claim 1 when it is executed by a processor.

13. System comprising at least one user terminal (10) and a plurality of nodes (N1-N3) belonging to at least one content delivery network, said nodes being able to deliver one or more portions of content to said user terminal, said system being such that a first node, called instigator node (N1), selected from the plurality of nodes, comprises means for:
- calculating results of comparisons, for a plurality of portions of the delivered content, of the values of at least one actual telemetry datum with corresponding values of at least one expected telemetry datum,
and **characterized by** means for:
- receiving at least one result of the same comparisons made by at least one second node, called follower node (N2-N3), selected from the plurality of nodes,
- acknowledging the delivery of the content when at least a majority of the comparison results obtained indicate conformity of the values of at least one actual telemetry datum with the corresponding values of at least one expected telemetry datum.
